# EUROPEAN PATENT SPECIFICATION

(11) **EP 4 071 949 B1**
(45) Date of publication and mention of the grant of the patent: **25.06.2025**
(21) Application number: 22162362.2
(22) Date of filing: 02.08.2021
(51) Int. Cl.: H02G 3/12

(54) **INSTALLATION BOX WITH RETAINING PROJECTIONS**
INSTALLATIONSDOSE MIT HALTEVORSPRÜNGEN
BOÎTE D'INSTALLATION AVEC PROJECTIONS DE RETENUE

(30) Priority: 17.08.2020 NL 2026275
(43) Date of publication of application: 12.10.2022
(62) Divisional of application: 21189103.1
(73) Proprietor: Attema B.V., 4203 NJ Gorinchem (NL)
(72) Inventor: DE HOOG, Antonie, 4203 NJ Gorinchem (NL)
(74) Representative: EP&C

(56) References cited:
- EP-A1- 2 615 708
- BE-A4- 1 010 417
- NL-C2- 1 019 049

## Description

### FIELD OF THE INVENTION

The invention relates to the field of installation material for mounting in a wall of a building, and more specifically to installation boxes, also referred to as junction boxes. The installation box is configured to be part of an installation, such as an electrical and/or optical installation, and serves for interconnecting electrical wiring and/or optical fibers, and accommodating electrical and/or optical installation material such as switching material.

### BACKGROUND OF THE INVENTION

Installation boxes are mounted in holes in a wall of a building. Such a hole may be provided according to the circumstances at hand. If the wall is a solid wall, for example made of concrete or brickwork, a blind hole with a predetermined depth, depending on the thickness of the wall, may be provided. The installation box may be provided with projections for a mechanical engagement with an inner wall of the hole, to avoid a displacement of the installation box after mounting thereof in the hole in the wall.

EP2615708 A1 discloses an installation box comprising a housing provided with a bottom wall and a cylindrical circumferential wall that is upright from the bottom wall and has a centre line, wherein the circumferential wall comprises a circular circumferential edge that faces away from the bottom wall and bounds an opening of the housing. Around the circumferential wall, the housing is provided with integrally formed groups of positioning protrusions, placement protrusions and alignment protrusions in the form of ribs, strips or flaps. The groups of protrusions are divided into groups and extend radially outward from the outer surface of the circumferential wall. The protrusions are slightly flexible and are adapted for getting into contact with or engaging onto the hole in the wall in order to position, secure and/or align the installation box in there.

Further, for example, NL 1019049 C2 discloses an installation box provided with resilient strips arranged on a side wall of the installation box, for placement of the box in a hole in a wall.

As another example, EP1675238 A1 discloses an installation box provided with sideward deformable bending flaps arranged on a side wall of the installation box, to retain the box in a hole in a wall.

A need exists to improve a mechanical engagement of the installation box with an inner wall of the hole in the wall.

### SUMMARY OF THE INVENTION

It would be desirable to provide an improved or at least alternative installation box having an improved mechanical engagement with an inner wall of a hole in a wall.

To better address this concern, according to the invention an installation box for mounting in a hole of a wall according to claim 1 is provided.

The longitudinal axis of the installation box is a central axis running through a centre of the mouth of the installation box, and through a centre of the bottom wall of the installation box.

Herein, the adjectives 'upper' and 'lower' are associated with an installation box position in which the mouth of the installation box is upwards, and the bottom wall of the installation box is downwards.

The retaining projections can be part of different types of installation boxes, including but not limited to installation boxes with a variable height or installation boxes with a fixed height, wherein the retaining projections are located on a side wall of the installation box, and wherein the installation box is configured to be mounted in a hole in a wall, the hole having an inner side wall, and having transverse dimensions slightly larger than the transverse dimensions of the installation box.

The retaining projections aid in stabilizing a position of the installation box in a hole in the wall.

When inserting the installation box according to the invention into a hole in a wall, which hole may be congruent with the transverse dimensions of the installation box, the retaining arms have a centering function when the side wall(s) of the hole urge the retaining arms to be bent, i.e. the retaining arms urge the installation box to be centered with respect to the hole, when viewed in a plane at right angles to the longitudinal axis of the installation box. During the same insertion of the installation box into the hole in the wall, the side wall(s) of the hole urge the retaining flaps to be bent upwardly, i.e. in the direction of the box mouth, wherein free ends of the retaining flaps are elastically forced against the side wall(s) of the hole, and act as barbs against removal of the installation box from the hole. The retaining arms, having the centering function, prevent one or more of the retaining flaps to become bent to a degree that they become less effective, which they would be when the plane of the free ends of the retaining flaps extend at a small angle, such as less than 40 degrees, to the longitudinal axis of the installation box. Accordingly, with the combination of retaining arms and retaining flaps, the installation box is held securely in the hole in the wall. Installation boxes may be inserted into holes having different transverse dimensions. With retaining flaps of different radial lengths, as measured from the longitudinal axis of the installation box, it may be assured that at least one retaining flap of a group performs its retaining function with respect to the hole in the wall in an optimum manner, whereas each one of the remaining retaining flaps may be inoperative, i.e. not contact the side wall of the hole, or be less operative in its retaining function, e.g. by being little bent, or being overly bent, or even broken as a result of overly bending.

It is noted that the installation box, as well as the hole, may have a substantially cylindrical cross-section with a predetermined diameter, such that the box mouth and the bottom wall are circular, or may have another cross-section, in particular a polygonal cross-section, such as a rectangular or square cross-section.

In an embodiment of the installation box, each retaining arm comprises structured ribs extending parallel to the longitudinal axis and radially to enhance a grip of the retaining arm on an inner wall of the hole.

The ribs primarily increase a force needed to move the installation box in a circumferential direction. The ribs further resist the installation box to move into, or out of the hole.

In an embodiment of the installation box, the retaining arms are equidistantly spaced along the circumference of the side wall.

A good centering function of the retaining arms is reached when the retaining arms are equidistantly spaced along the circumference of the side wall of the installation box.

In an embodiment of the installation box, the retaining arms are placed to be diagonally anti-symmetrical.

Placing the retaining arms diagonally anti-symmetrical with respect to the longitudinal axis of the installation box, i.e. one retaining arm at one circumferential position on the side wall opposite to an opposite retaining arm at an opposite circumferential position on the side wall, provides a good centering function as seen in a plane including the longitudinal axis and said circumferential positions.

In an embodiment of the installation box, each retaining flap comprises a free end being structured to enhance a grip of the retaining flap on an inner wall of the hole.

The structured free ends of the retaining flaps primarily increase a force needed to move the installation box parallel to its longitudinal axis into, or out of the hole. The ribs further resist the installation box to move in a circumferential direction.

In an embodiment of the installation box, each group of retaining flaps comprises three retaining flaps.

Three retaining flaps each having a different radial length can ensure a retaining function in a variety of holes which are found in practice.

In an embodiment of the installation box, the radial lengths vary between a shortest length closest to the bottom wall of the installation box and a largest length closest to the box mouth of the installation box.

The radial length of the uppermost retaining flap, i.e. the retaining flap closest to the box mouth of the installation box, is larger than the radial length of the lowermost retaining flap, i.e. the retaining flap closest to the bottom wall of the installation box. A retaining flap located in between the uppermost retaining flap and the lowermost retaining flap, has a radial length which is larger than the radial length of the lowermost retaining flap, and which is smaller than the radial length of the uppermost retaining flap. In this way, a bending of a retaining flap during and after insertion of the installation box in a hole does not compromise the retaining function of a retaining flap located lower, i.e. closer to the bottom wall of the installation box.

In an embodiment of the installation box, the groups of retaining flaps are spaced equidistantly along the circumference of the side wall.

A good retaining function of the retaining flaps is reached when the retaining flaps are equidistantly spaced along the circumference of the side wall of the installation box, thereby enhancing the centering function of the retaining arms.

In an embodiment of the installation box, the retaining arms are located closer to the box mouth of the installation box than the retaining flaps.

For the retaining flaps to perform their retaining function best, and at the same time the retaining arms to perform their centering function best, the retaining arms are located further away from the bottom wall of the installation box than the retaining flaps. Thus, in particular during the last stage of inserting the installation box into a hole in the wall, the retaining arms prevent that similar retaining flaps at different locations along the circumference of the side wall of the installation box are loaded differently, and thus bent differently, which would occur if the installation box would be mounted obliquely in the hole.

In an embodiment of the installation box, a retaining arm is located at the same circumferential position of the side wall of the installation box as a retaining flap.

Locating a retaining arm above or below a retaining arm provides ample space at the side wall for making provisions for coupling different installation boxes, or coupling a pipe portion to the installation box.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective view of an embodiment of an installation box according to the present invention.
Figure 2 depicts a side view of the embodiment of the installation box of Figure 1, viewed in a direction indicated by II in Figure 1.
Figure 3 depicts a top view of the embodiment of the installation box of Figure 1.
Figure 4 depicts a bottom view of the embodiment of the installation box of Figure 1.
Figure 5 depicts a cross-sectional view of the embodiment of the installation box of Figure 1, according to a plane indicated by V-V in Figure 3.
Figure 6 depicts a detailed view on an enlarged scale of a part of Figure 5.
Figure 7 depicts a cross-sectional view of the embodiment of the installation box of Figure 1, according to a plane indicated by VII-VII in Figure 5.
Figures 8A, 8B and 8C depict cross-sectional views similar to Figure 5 of the embodiment of the installation box of Figure 1, in an extended state of the support strips, in a first partially folded state of the support strips, and in a second fully folded state of the support strips, respectively.
Figures 9A, 9B and 9C illustrate cross-sectional views of alternative shapes of support strips.

### DETAILED DESCRIPTION OF EMBODIMENTS

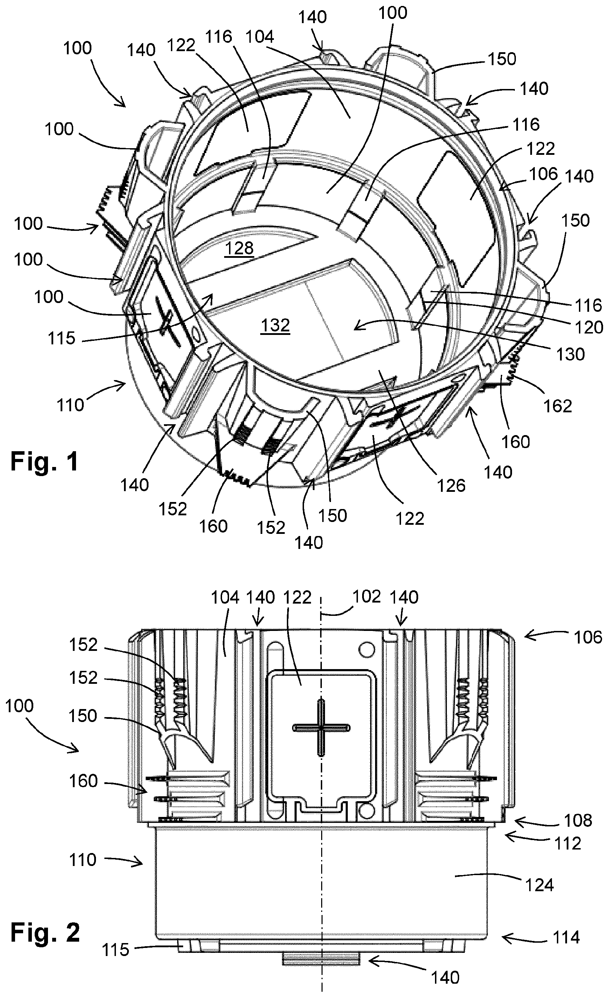

Figures 1 to 7 depict (parts of) an embodiment of an installation box 100 configured for mounting in a hole of a wall. The installation box 100 has an (imaginary) longitudinal axis 102 (as shown in Figure 2). The installation box 100 comprises a rigid cylindrical upper side wall portion 104 having a first upper edge region 106 defining an open box mouth which is configured to be closed off by a cover (not shown), and a first lower edge region 108. Furthermore, the installation box 100 comprises a deformable cylindrical lower side wall portion 110 having a second upper edge region 112 adjoining the first lower edge region 108, and a second lower edge region 114. A circular bottom wall 115 adjoins the second lower edge region 114.

The lower side wall portion 110 comprises a plurality of support strips 116 spaced along the circumference of the lower side wall portion 110. In the depicted embodiment, eight support strips 116 are present. However, in other embodiments, less or more than eight support strips may be included, depending on the configuration and/or sizes of the support strips and the use conditions. Each support strip 116 extends between the second upper edge region 112 and the second lower edge region 114 in the direction of the longitudinal axis 102. The lower side wall portion 110 further comprises a plurality of lower side wall parts 118 made from a flexible material. Each lower side wall part 118 extends between two adjacent support strips 116 and between the second upper edge region 112 and the second lower edge region 114.

As will be explained in more detail below, each support strip 116 is configured to remain in an extended state under a force exerted in a direction along the longitudinal axis 102 of the installation box 100 when said force is less than or equal to a predetermined force, and to fold outwardly along a folding line 120 (Figure 1) extending transverse to the longitudinal axis 102 of the installation box 100 from the extended state to a folded state when said force exceeds said predetermined force.

The upper side wall portion 104 mainly is made from a rigid material, such as a plastic material, in particular polypropylene, with the exception of window parts 122 which are made from a flexible material, and may be pierced to allow the passage or wires, cables or other installation material. This flexible material may be the same as the flexible material of the lower side wall parts 118, or may differ therefrom. Overall, the structure of the upper side wall portion 104 is essentially rigid, at least when considered in the direction of the longitudinal axis 102 of the installation box 100.

The lower side wall portion 110 comprises a cylindrical layer of flexible material 124, and the support strips 116. The layer 124 extends over, and is in contact with the side of the support strips 116 facing away from an interior of the installation box 100. The lower side wall parts 118 are integral with the layer 124. In other embodiments, the lower side wall parts 118 may alternate with the support strips 116, so that there is no layer 124, in particular there is no flexible material, on the side of the support strips 116 facing away from an interior of the installation box 100, and there is only the flexible material of the lower side wall parts 118 between adjacent support strips 116.

The width of each support strip 116 in a circumferential direction of the lower side wall portion 110 is smaller than the length of the support strip 116 in a direction along the longitudinal axis 102 of the installation box 100. In the embodiment shown in the Figures, a ratio of the width to the length of the support strip is about 0.15. In other embodiments, the ratio may be between 0.1 and 0.5. The supports strips 116 are equidistantly spaced along the circumference of the lower side wall portion 110. The width of each support strip 116 in the circumferential directions of the lower side wall portion 110 is the same. Also, the width of each support strip 116 is the same along its length. A ratio of the width of a support strip to a width of a lower side wall part 118 is about 0.2. In other embodiments, the ratio may be between 0.15 and 1.

The bottom wall 115 comprises a frame 126 made from a rigid material, and comprising windows 128, 130 made from a flexible material. The window 130 comprises a window part 132 having the same function as the window parts 122 to provide, upon piercing, a passage for wires, cables and other installation material.

The parts of the installation box 100 made from a rigid material, and the parts of the installation box 100 made from a flexible material may be obtained through a two-component injection moulding process by injecting, for example, polypropylene as the rigid material, and thermoplastic elastomer, TPE, as the flexible material. Other materials providing the required rigidity and flexibility, respectively, and showing suitable elasticity, may be applied as well.

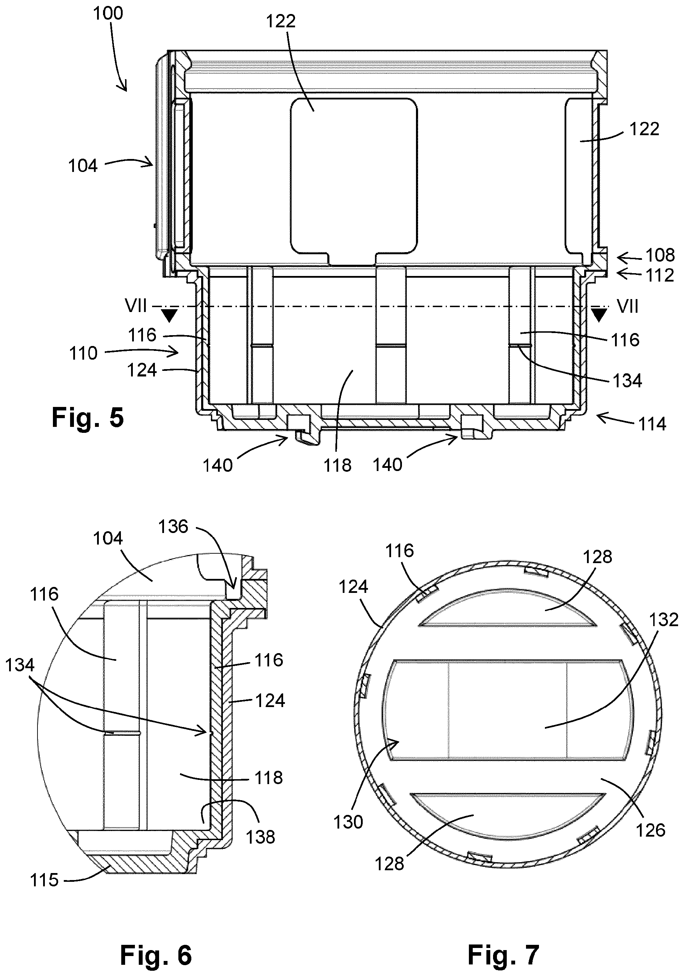

Referring to Figures 5 to 7, each support strip 116 is provided with a recess or groove 134 at the side of the support strip 116 facing the interior of the installation box 100. The groove may have a semi-circular, a triangular, a rectangular, or another suitable cross-section.

The groove 134 determines a folding line 120 (Figure 1). A distance between the groove 134 and the second upper edge region 112 is substantially equal to the distance between the groove 134 and the second lower edge region 114. The groove 134 and its location on the support strip 116 ensures that the support strip 116 will fold radially outwardly at the groove 134 once a compressive force exerted on the support strip 116 in the direction of the longitudinal axis 102 exceeds a predetermined force, since the side of the support strip 116 facing away from the interior of the installation box 100 is able to absorb more force than the opposite side. The installation box 100 is designed such that the predetermined force may be applied by a person using manual power.

As illustrated in Figure 7, each support strip 116 may be curved along the circumference of the lower side wall portion 110, with a concave side of the support strip 116 facing an interior of the installation box 100. This curvature promotes the outward folding of the support strip 116 once said predetermined force is exceeded, and prevents an inward folding.

At the second upper edge region 112, each support strip 116 may be hingeably connected to the first lower edge region 108. In practice, an upper end of each support strip 116 may be rigidly connected to the first lower edge region 108 when the support strip 116 is in an extended state, and may be bent or broken at this connection, indicated with arrow 136 (Figure 6), when the support strip 116 is in a folded state, whereby the adjacent layer 124 made from flexible material provides a hinge function.

Similarly, at the second lower edge region 114, each support strip 116 may be hingeably connected to the bottom wall 115, in particular to the frame 126 thereof. In practice, a lower end of each support strip 116 may be rigidly connected to the bottom wall 115 when the support strip 116 is in an extended state, and may be bent or broken at this connection, indicated with arrow 138 (Figure 6), when the support strip 116 is in a folded state, whereby the adjacent layer 124 made from flexible material provides a hinge function.

The installation box 100 is provided with coupling portions 140 each defining a groove member and a hook member. The embodiment of the installation box 100 shown comprises ten coupling portions 140 on the outer side of the installation box 100: four circumferentially equidistant pairs of coupling portions 140, each pair adjacent to, and on opposing sides of respective window parts 122, and one pair of coupling portions 140 adjacent to, and on opposing sides of window part 132 on the bottom wall 115. Each pair of coupling portions 140 allows the installation box 100 to be coupled to another installation box, or allows a pipe portion comprising similar coupling portions to be coupled to the installation box 100. The coupling takes place by inserting the hook members of two coupling portions 140 of a first pair into groove members of two coupling portions 140 of a second pair, and at the same time inserting the hook members of the two coupling portions 140 of the second pair into groove members of the two coupling portions 140 of the first pair.

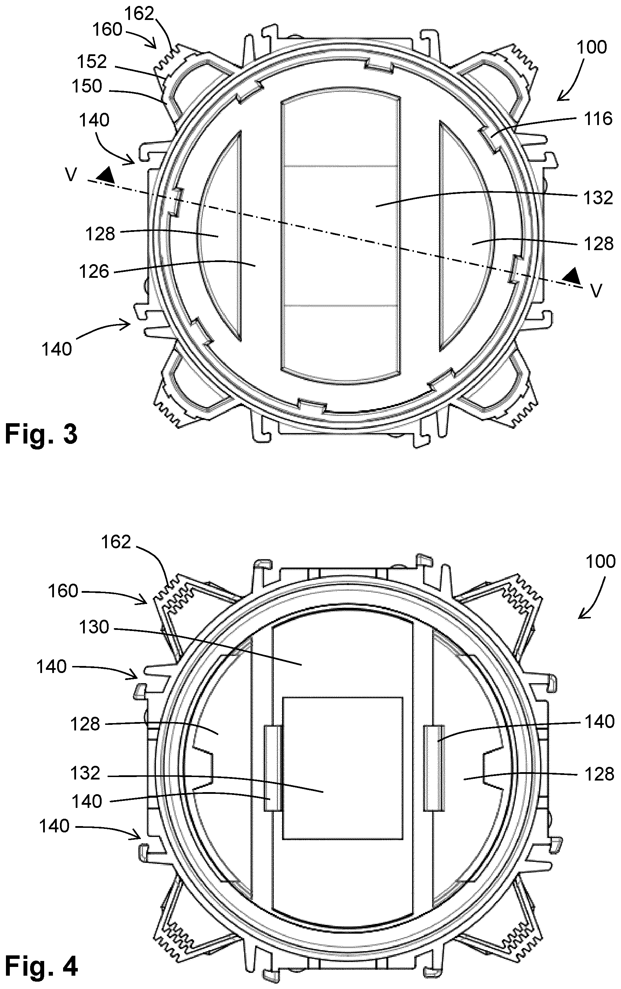

As shown e.g. in Figure 3, no support strip 116 is provided in a circumferential position of the installation box where a centre of a coupling with another installation box (i.e. a centre of a pair of coupling portions 140 or, in other words, a centre of a window part 122) is envisaged, thereby preventing a folded support strip of one of coupled installation boxes to mechanically interfere with a folded support strip the other one of the coupled installation boxes in case the support strips of the coupled installation boxes would need to enter into a folded state thereof during and after mounting of the coupled installation boxes. Instead, a folded support strip of one of the coupled installation boxes may extend into a flexible lower side wall part 118 of the other one of the coupled installation boxes, and be folded properly.

The upper side wall portion 104 is provided with radially outwardly extending retaining projections, comprising (as seen in cross-section) J-shaped retaining arms 150 and retaining flaps 160, to anchor the installation box 100 in a hole in a wall. In the embodiment shown, the installation box comprises four retaining arms 150 and twelve retaining flaps 160, however, in other embodiments these numbers may be selected differently. The projections are flexible and elastic to ensure a firm grip on, and a mechanical engagement with an inner wall of the hole, to avoid a displacement of the installation box 100 after mounting thereof in the hole in the wall.

The retaining projections can be part of the installation box in the embodiment as shown, but can also be part of other types of installation boxes, including but not limited to installation boxes with a variable height or installation boxes with a fixed height, wherein the retaining projections are located on a side wall of the installation box, and wherein the installation box is configured to be mounted in a hole in a wall, the hole having an inner side wall, and having transverse dimensions slightly larger than the transverse dimensions of the installation box.

Each retaining arm 150 is connected to the outer surface of the upper side wall portion 104 at one end thereof, the connection extending substantially parallel to the longitudinal axis 102. The retaining arm 150 may be elastically bent relative to said connection to deform when urged to do so during the mounting of the installation box 100 in a hole. The retaining arms comprise a centring function for the installation box 100 in the hole, in particular a hole in a massive wall. Structured ribs 152 extending parallel to the longitudinal axis 102 and radially from the retaining arm 150 enhance a grip of the retaining arm 150 on an inner wall of a hole in a wall. The retaining arms 150 are equidistantly spaced along the circumference of the upper side wall portion 104, and are configured to be diagonally anti-symmetrical. The retaining arms 150 mainly serve to centre the installation box 100 and hold the installation box 100 in a hole in a wall in a circumferential direction, but also resist a displacement of the installation box 100 in a direction of the longitudinal axis 102.

Each retaining flap 160 is connected to the outer surface of the upper side wall portion 104 at one end, the connection extending substantially in a circumferential direction. In the embodiment shown, four groups of three retaining flaps 160 each are provided, wherein a group of retaining flaps 160 is spaced in the direction of the longitudinal axis 102 and comprises retaining flaps 160 having different radial lengths, varying between a shortest length closest to the first lower edge region 108 and a largest length closest to the first upper edge region 106. The retaining flaps 160 each extend in a plane transverse to the longitudinal axis 102. Each retaining flap 160 may be elastically bent relative to said connection to deform upwardly when urged to do so during the mounting of the installation box 100 in a hole. Free ends 162 of the retaining flaps 160 are structured to enhance a grip of the retaining flap 160 on an inner wall of a hole in a wall. The groups of retaining flaps 160 are spaced equidistantly along the circumference of the upper side wall portion 104, and mainly serve to hold the installation box 100 in a hole in a wall in a downwards direction along the longitudinal axis, resisting a displacement of the installation box 100 in an upwards direction along the longitudinal axis 102, but also resisting a displacement of the installation box 100 in a circumferential direction. The different radial lengths of the retaining flaps 160 enable the installation box to be retained in holes having different diameters, wherein the retaining flaps 160 having the shortest length are particularly effective in holes having a relatively small diameter (wherein the retaining flaps 160 having the largest length are less effective), whereas the retaining flaps 160 having the largest length are particularly effective in holes having a relatively large diameter (wherein the retaining flaps 160 having the shortest length are less effective). The retaining flaps having an intermediate length are most effective in holes having a medium diameter (wherein the retaining flaps 160 having the shortest length and those having the largest length are less effective).

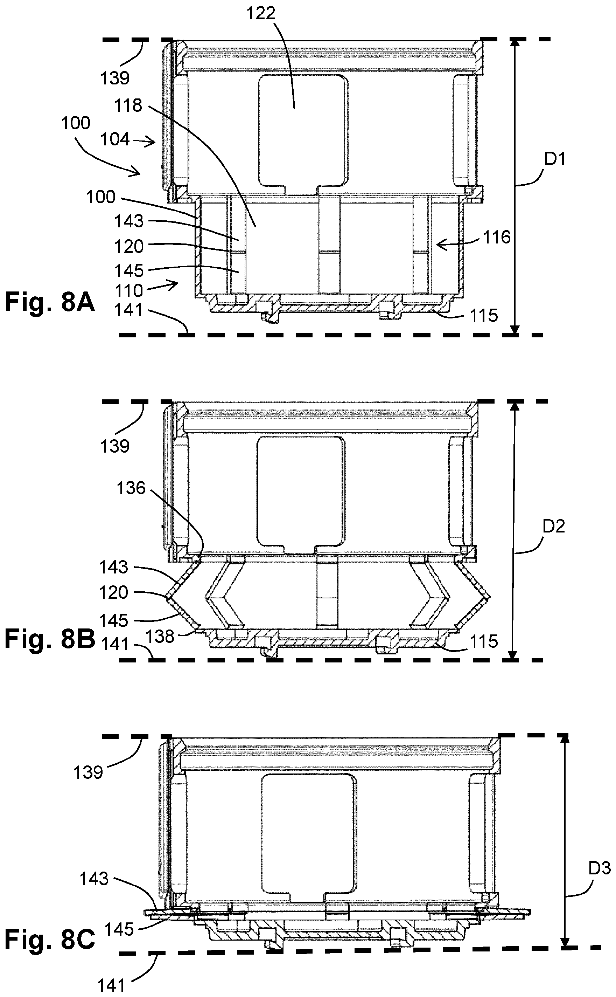

The mounting of the installation box 100 in a hole in a wall is illustrated with the aid of Figures 8A, 8B and 8C. For clarity, the layer 124 is omitted in these Figures.

During mounting the installation box 100 in a hole of a wall (an outer plane of the wall being indicated by dashed line 139), the bottom wall 115 of the installation box 100 may move relatively soft material, such as hardened plaster, aside from the inner wall of the hole, by breaking it away or breaking it to pieces, or pulverizing it, for example. For this purpose, a force which may be referred to as a mounting force exerted on the installation box 100, for example at the box mouth (or the first upper edge region 106), or at a part of the box mouth, is transmitted through the rigid upper side wall portion 104 to at least some of the support strips 116 to the bottom wall 115 in a direction along the longitudinal axis 102 of the installation box 100. At this stage, the mounting force, as distributed across one or more support strips 116, may lead to a force on each support strip 116 being less than or equal to the predetermined force under which the support strip maintains its extended state, and stays in its extended state, yet high enough to move the installation box 100 into the hole in the wall and remove obstacles of relatively soft material in the mounting path of the installation box 100. At this stage, the installation box 100 retains its maximum, first height. The lower side wall parts 118, being made from a flexible material, cannot transfer any substantial force in the direction of the longitudinal axis 102 of the installation box 100.

The hole in the wall may be as deep as, or deeper than (see distance D1 in Figure 8A), the maximum, first height of the installation box 100. If the force on each support strip 116 is not higher than said predetermined force, in this case the mouth of the installation box 100 may be mounted flush with the outer plane 139 of the wall in which the hole is provided, retaining its maximum, first height, with all support strips 116 in their extended state, providing a maximum volume at the interior of the installation box 100 for wiring and mounting installation material.

On the other hand, assuming that the depth of the hole is less (see distance D2 in Figure 8B and distance D3 in Figure 8C) than the maximum, first height of the installation box, then during the mounting of the installation box 100 there will be a point where the bottom wall 115 of the installation box 100 contacts the hole bottom 141, so that the bottom wall 115 of the installation box 100 cannot move any further into the hole. Next, by increasing the mounting force to exceed said predetermined force at each support strip 116 under which the support strips 116 transfer from their extended state into their folded state, the support strips 116 will collapse and fold along their folding line 120, whereby the height of the lower side wall portion 110 may decrease, and the upper side wall portion 104 may move further into the hole until the box mouth is substantially flush with the outer plane 139 of the wall in which the hole is provided. When collapsing, each support strip 116 comprises an upper strip section 143 on one side of the folding line 120, and a lower strip section 145 on the other side of the folding line 120. In the collapsed state of the support strip 116, the respective upper strip section 143 and lower strip section 145 in itself may remain straight, or may bend and be curved as seen in a plane extending through the longitudinal axis 102 of the installation box. In the illustrated embodiment, the upper and lower strip sections 143, 145 remain straight. The flexible lower side wall parts 118 will be locally stretched in the folded state of the adjacent support strips 116, however, they will keep each mesh formed between edges of adjacent support strips 116, the second upper edge region 112 and the second lower edge region 114 closed or sealed.

When the installation box 100 is flush mounted, still assuming that the depth D2 or D3 of the hole is less than the maximum, first height of the installation box 100, for each support strip 116 at least part of the strip section 143, 145 of the support strip 116 on one side of the folding line 120 may be oriented at an angle of less than 180° to at least part of another strip section 145, 143 of the support strip 116 on the other side of the folding line 120. At most, said angle is 0° when the two (parts of the) respective strip sections 143, 145 rest against each other, whereby the lower side wall portion 110 has a minimum height, and accordingly also the installation box 100 has its minimum height, as illustrated in Figure 8C. However, depending on the depth D1, D2 or D3 of the hole in the wall, any angle between (and including) 0° and 180° is possible.

Accordingly, the installation box 100 will fit into holes in a wall having different depths, while providing optimum space in the interior of the installation box 100, both with the support strips 116 in an extended state and with the support strips 116 in a folded state.

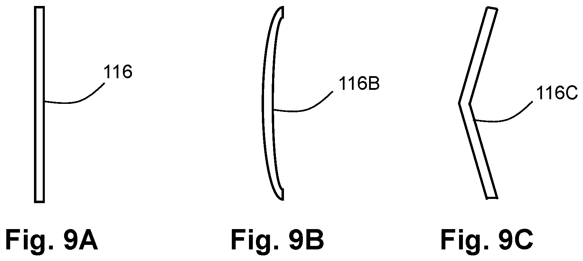

In the embodiment of the installation box 100 discussed above, in the extended state of the support strip 116, the support strip 116 is straight, as illustrated in the longitudinal cross-sectional view according to Fig. 9A. In other embodiments, the support strip in its extended state may be bent or curved, like the support strip 116B as illustrated in the longitudinal cross-sectional view according to Fig. 9B, wherein the concave side of the support strip 116B will be facing the interior of the installation box. In still other embodiments, the support strip in its extended state may be angled, where a straight upper support strip section extends at an angle to a straight lower support strip section, like the support strip 116C as illustrated in the longitudinal cross-sectional view according to Fig. 9C, wherein the concave side of the support strip 116C will be facing the interior of the installation box.

As explained above, an installation box for mounting in a hole of a wall has a longitudinal axis, and comprises a side wall having an upper edge region defining a box mouth, and a lower edge region adjoining a bottom wall, wherein the side wall on its outer surface is provided with radially extending retaining projections for clamping the installation box inside the hole of the wall. The retaining projections are flexible and elastic, and comprise retaining arms and retaining flaps. The retaining arms each have a J-shaped cross-section, each retaining arm being connected to the outer surface of the side wall at one end of the retaining arm, the connection extending substantially parallel to the longitudinal axis. Each retaining arm is configured to be elastically bent relative to said connection to deform when urged to do so during the mounting of the installation box in the hole. The retaining flaps are connected to the outer surface of the side wall at one end of each retaining flap, the connection extending substantially in a circumferential direction. Each retaining flap extends in a plane transverse to the longitudinal axis, and is configured to be elastically bent relative to said connection to deform upwardly when urged to do so during the mounting of the installation box in the hole.

As required, detailed embodiments of the present invention are disclosed herein. However, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps).

## Claims

1. An installation box (100) for mounting in a hole of a wall, the installation box having a longitudinal axis (102), and comprising:
a side wall having an upper edge region defining a box mouth, and a lower edge region adjoining a bottom wall (115), wherein the side wall on its outer surface is provided with radially extending retaining projections (150, 160) for clamping the installation box inside the hole of the wall, wherein the retaining projections (150, 160) are flexible and elastic, and comprise retaining flaps (160) connected to the outer surface of the side wall at one end of each retaining flap (160), the connection extending substantially in a circumferential direction, each retaining flap (160) extending in a plane transverse to the longitudinal axis (102), and being configured to be elastically bent relative to said connection to deform upwardly in a direction of the box mouth when urged to do so during the mounting of the installation box (100) in the hole, wherein groups of retaining flaps (160) are provided, wherein the retaining flaps (160) of a group are spaced in the direction of the longitudinal axis (102),
**characterized in that** the retaining projections further comprise retaining arms (150) each having a J-shaped cross-section, each retaining arm (150) being connected to the outer surface of the side wall at one end of the retaining arm (150), the connection extending substantially parallel to the longitudinal axis (102), each retaining arm being configured to be elastically bent relative to said connection to deform when urged to do so during the mounting of the installation box (100) in the hole; and
each group of retaining flaps (160) comprises retaining flaps (160) having different radial lengths.

2. The installation box (100) according to claim 1, wherein each group of retaining flaps (160) comprises three retaining flaps (160).

3. The installation box (100) according to claim 1 or 2, wherein the radial lengths vary between a shortest length closest to the bottom wall (115) of the installation box (100) and a largest length closest to the box mouth of the installation box (100).

4. The installation box (100) according to any one of the preceding claims, wherein the groups of retaining flaps (160) are spaced equidistantly along the circumference of the side wall.

5. The installation box (100) according to any one of claims 1 to 4, wherein each retaining flap (160) comprises a free end (162) being structured to enhance a grip of the retaining flap (160) on an inner wall of the hole.

6. The installation box (100) according to any one of the preceding claims, wherein each retaining arm (150) comprises structured ribs (152) extending parallel to the longitudinal axis (102) and radially to enhance a grip of the retaining arm (150) on an inner wall of the hole.

7. The installation box (100) according to any one of the preceding claims, wherein the retaining arms (150) are equidistantly spaced along the circumference of the side wall.

8. The installation box (100) according to any one of the preceding claims, wherein the retaining arms (150) are placed to be diagonally anti-symmetrical.

9. The installation box (100) according to any one of the preceding claims, wherein the retaining arms (150) are located closer to the box mouth of the installation box (100) than the retaining flaps (160).

10. The installation box (100) according to any one of the preceding claims, wherein a retaining arm (150) is located at the same circumferential position of the side wall of the installation box as a retaining flap (160).

## Patentansprüche

1. Installationsdose (100) zur Montage in einem Loch einer Wand, wobei die Installationsdose eine Längsachse (102) aufweist und Folgendes umfasst:
eine seitliche Wandung mit einer Oberkantenregion, die eine Dosenmündung definiert, und einer Unterkantenregion, die an eine untere Wandung (115) angrenzt, wobei die seitliche Wandung auf ihrer Außenseite mit sich radial erstreckenden Haltevorsprüngen (150, 160) versehen ist, um die Installationsdose im Innern des Lochs der Wand festzuklemmen, wobei die Haltevorsprünge (150, 160) flexibel und elastisch sind und Halteklappen (160) umfassen, die an einem Ende jeder Halteklappe (160) mit der Außenfläche der seitlichen Wandung verbunden sind, wobei sich die Verbindung im Wesentlichen in einer Umfangsrichtung erstreckt, wobei sich jede Halteklappe (160) in einer Ebene quer zu der Längsachse (102) erstreckt und dafür gestaltet ist, sich relativ zu der Verbindung elastisch zu biegen, um sich in Richtung der Dosenmündung nach oben zu verformen, wenn sie während der Montage der Installationsdose (100) in dem Loch dazu gezwungen wird, wobei Gruppen von Halteklappen (160) bereitgestellt sind, wobei die Halteklappen (160) einer Gruppe in Richtung der Längsachse (102) beabstandet sind,
**dadurch gekennzeichnet, dass** die Haltevorsprünge ferner Haltearme (150) umfassen, die jeweils einen J-förmigen Querschnitt aufweisen, wobei jeder Haltearm (150) an einem Ende des Haltearms (150) mit der Außenfläche der seitlichen Wandung verbunden ist, wobei sich die Verbindung im Wesentlichen parallel zu der Längsachse (102) erstreckt, wobei jeder Haltearm dafür gestaltet ist, sich relativ zu der Verbindung elastisch zu biegen, um sich zu verformen, wenn er während der Montage der Installationsdose (100) in dem Loch dazu gezwungen wird; und
wobei jede Gruppe von Halteklappen (160) Halteklappen (160) mit unterschiedlichen radialen Längen aufweist.

2. Installationsdose (100) nach Anspruch 1, wobei jede Gruppe von Halteklappen (160) drei Halteklappen (160) umfasst.

3. Installationsdose (100) nach Anspruch 1 oder 2, wobei die radialen Längen zwischen einer kürzesten Länge, die der unteren Wandung (115) der Installationsdose (100) am nächsten ist, und einer größten Länge, die der Dosenmündung der Installationsdose (100) am nächsten ist, variieren.

4. Installationsdose (100) nach einem der vorhergehenden Ansprüche, wobei die Gruppen von Halteklappen (160) äquidistant entlang des Umfangs der seitlichen Wandung beabstandet sind.

5. Installationsdose (100) nach einem der Ansprüche 1 bis 4, wobei jede Halteklappe (160) ein freies Ende (162) umfasst, das dafür strukturiert ist, einen Halt der Halteklappe (160) an einer inneren Wandung des Lochs zu verbessern.

6. Installationsdose (100) nach einem der vorhergehenden Ansprüche, wobei jeder Haltearm (150) strukturierte Rippen (152) umfasst, die sich parallel zu der Längsachse (102) und radial erstrecken, um einen Halt des Haltearms (150) an einer inneren Wandung des Lochs zu verbessern.

7. Installationsdose (100) nach einem der vorhergehenden Ansprüche, wobei die Haltearme (150) äquidistant entlang des Umfangs der seitlichen Wandung beabstandet sind.

8. Installationsdose (100) nach einem der vorhergehenden Ansprüche, wobei die Haltearme (150) so platziert sind, dass sie diagonal antisymmetrisch sind.

9. Installationsdose (100) nach einem der vorhergehenden Ansprüche, wobei die Haltearme (150) näher an der Dosenmündung der Installationsdose (100) angeordnet sind als die Halteklappen (160).

10. Installationsdose (100) nach einem der vorhergehenden Ansprüche, wobei sich ein Haltearm (150) an der gleichen Umfangsposition der seitlichen Wandung der Installationsdose wie eine Halteklappe (160) befindet.

## Revendications

1. Boîte d'installation (100) destinée à être montée dans un trou d'un mur, la boîte d'installation ayant un axe longitudinal (102), et comprenant :
une paroi latérale ayant une région bord supérieure définissant une embouchure de boîte, et une région bord inférieure contiguë à une paroi de dessous (115), dans laquelle la paroi latérale, sur sa surface extérieure, est pourvue de saillies de retenue (150, 160) s'étendant radialement pour serrer la boîte d'installation à l'intérieur du trou du mur, dans laquelle les saillies de retenue (150, 160) sont flexibles et élastiques, et comprennent des pattes de retenue (160) reliées à la surface extérieure de la paroi latérale à une extrémité de chaque patte de retenue (160), la liaison s'étendant sensiblement dans une direction circonférentielle, chaque patte de retenue (160) s'étendant dans un plan transversal à l'axe longitudinal (102), et étant configurée pour être élastiquement fléchie relativement à ladite liaison pour se déformer vers le haut dans une direction de l'embouchure de boîte lorsqu'elle est forcée de le faire durant le montage de la boîte d'installation (100) dans le trou, dans laquelle des groupes de pattes de retenue (160) sont prévus, dans laquelle les pattes de retenue (160) d'un groupe sont espacées dans la direction de l'axe longitudinal (102),
**caractérisée en ce que** les saillies de retenue comprennent en outre des bras de retenue (150) chacun ayant une section transversale en forme de J, chaque bras de retenue (150) étant relié à la surface extérieure de la paroi latérale à une extrémité du bras de retenue (150), la liaison s'étendant de façon sensiblement parallèle à l'axe longitudinal (102), chaque bras de retenue étant configuré pour être élastiquement fléchi relativement à ladite liaison pour se déformer lorsqu'il est forcé de le faire durant le montage de la boîte d'installation (100) dans le trou ; et
chaque groupe de pattes de retenue (160) comprend des pattes de retenue (160) ayant des longueurs radiales différentes.

2. Boîte d'installation (100) selon la revendication 1, dans laquelle chaque groupe de pattes de retenue (160) comprend trois pattes de retenue (160).

3. Boîte d'installation (100) selon la revendication 1 ou 2, dans laquelle les longueurs radiales varient entre une longueur la plus courte la plus près de la paroi de dessous (115) de la boîte d'installation (100) et une longueur la plus grande la plus près de l'embouchure de boîte de la boîte d'installation (100).

4. Boîte d'installation (100) selon l'une quelconque des revendications précédentes, dans laquelle les groupes de pattes de retenue (160) sont espacés de façon équidistante le long de la circonférence de la paroi latérale.

5. Boîte d'installation (100) selon l'une quelconque des revendications 1 à 4, dans laquelle chaque patte de retenue (160) comprend une extrémité libre (162) structurée pour améliorer une prise de la patte de retenue (160) sur une paroi intérieure du trou.

6. Boîte d'installation (100) selon l'une quelconque des revendications précédentes, dans laquelle chaque bras de retenue (150) comprend des nervures structurées (152) s'étendant parallèlement à l'axe longitudinal (102) et radialement pour améliorer une prise du bras de retenue (150) sur une paroi intérieure du trou.

7. Boîte d'installation (100) selon l'une quelconque des revendications précédentes, dans laquelle les bras de retenue (150) sont espacés de façon équidistante le long de la circonférence de la paroi latérale.

8. Boîte d'installation (100) selon l'une quelconque des revendications précédentes, dans laquelle les bras de retenue (150) sont placés pour être diagonalement antisymétriques.

9. Boîte d'installation (100) selon l'une quelconque des revendications précédentes, dans laquelle les bras de retenue (150) sont situés plus près de l'embouchure de boîte de la boîte d'installation (100) que les pattes de retenue (160).

10. Boîte d'installation (100) selon l'une quelconque des revendications précédentes, dans laquelle un bras de retenue (150) est situé à la même position circonférentielle de la paroi latérale de la boîte d'installation qu'une patte de retenue (160).
